# EUROPÄISCHE PATENTSCHRIFT

(11) **EP 2 693 108 B1**
(45) Veröffentlichungstag und Bekanntmachung des Hinweises auf die Patenterteilung: **03.08.2016**
(21) Anmeldenummer: 13172636.6
(22) Anmeldetag: 19.06.2013
(51) Int. Cl.: F21S 8/10, G02B 19/00, G02B 27/62, B29C 65/48, F21V 17/02, F21V 17/10

(54) **Lichtmodul und Verfahren zur Herstellung eines Lichtmoduls**
Light module and method of manufacturing the light module
Module d'éclairage et procédé de fabrication d'un module d'éclairage

(30) Priorität: 03.08.2012 DE 102012213841
(43) Veröffentlichungstag der Anmeldung: 05.02.2014
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, 72793 Pfullingen (DE)
(74) Vertreter: DREISS Patentanwälte PartG mbB

(56) Entgegenhaltungen:
- EP-A1- 0 591 031
- DE-A1-102004 056 252
- DE-A1-102008 033 383
- DE-A1-102009 019 730
- DE-A1-102010 030 743
- US-A1- 2007 285 630
- US-A1- 2009 016 074
- US-A1- 2011 244 165

## Beschreibung

Die Erfindung betrifft ein Lichtmodul gemäß dem Oberbegriff des Anspruchs 1, welches insbesondere zur Verwendung in Kfz-Scheinwerfern dient, und ein Verfahren gemäß Anspruch 7.

Unter einem Lichtmodul wird im vorliegenden Zusammenhang die eigentliche lichtaussendende Einheit eines Scheinwerfers verstanden, welche die gewünschte Abstrahllichtverteilung abgibt. Je nach Anwendungsgebiet soll die Abstrahllichtverteilung bestimmte, in der Regel gesetzlich vorgegebene, charakteristische Intensitätsverläufe aufweisen. So finden Lichtmodule einerseits zur Erzeugung einer abgeblendeten Lichtverteilung Verwendung, welche eine abschnittsweise im Wesentlichen horizontal verlaufende Hell-Dunkel-Grenze aufweist. Andererseits können Lichtmodule zur Erzeugung einer Fernlicht-Lichtverteilung dienen, welche sich insbesondere durch einen ausgeleuchteten Bereich oberhalb der Hell-Dunkel-Grenze auszeichnet. Bekannte Weiterentwicklungen solcher Lichtmodule betreffen die Erzeugung von Teil-Fernlicht oder Teil-Abblendlicht. Diese zeichnen sich durch eine Abstrahllichtverteilung aus, in welcher bestimmte Bereiche gezielt ausgeblendet beziehungsweise verdunkelt sind, und so beispielsweise ein gefährliches Blenden von Gegenverkehr vermieden werden kann.

Zur Erzeugung der genannten Abstrahllichtverteilung sind verschiedenartige technische Lösungen bekannt. Die bekannten Lichtmodule umfassen meist eine Lichtquelle zum Ausstrahlen von Licht, eine Primäroptik zum Formen einer gewünschten Zwischenlichtverteilung aus dem Licht der Lichtquelle, sowie eine Sekundäroptik, welche dazu eingerichtet ist, die von der Primäroptik erzeugte Lichtverteilung als Abstrahllichtverteilung in das Vorfeld des Lichtmoduls zu projizieren.

Damit die mit solchen Lichtmodulen erzeugte Abstrahllichtverteilung die gewünschten Eigenschaften hat, ist eine genaue Positionierung der optisch funktionalen Bauteile zueinander von entscheidender Bedeutung. Die Anordnung der Primäroptik relativ zur Lichtquelle hat wesentlichen Einfluss auf den Anteil des Lichts der Lichtquelle, welcher von der Primäroptik erfasst wird und bestimmt daher die Effizienz des Lichtmoduls. Eine genaue Anordnung von Sekundäroptik relativ zur Primäroptik ist erforderlich, da andernfalls aufgrund von Dispersionseigenschaften der (in der Regel als Sammellinse ausgebildeten) Sekundäroptik unerwünschte Farbränder (Farbsaum) in der abgestrahlten Lichtverteilung auftreten können.

Es ist daher erforderlich, bei der Herstellung eines Lichtmoduls die Position von Primäroptik relativ zur Lichtquelle beziehungsweise von Sekundäroptik relativ zur Primäroptik exakt festlegen zu können und die genannten Komponenten in ihrer gewünschten Position zuverlässig fixieren zu können. Da im Betrieb eines Lichtmoduls aufgrund der Wärmeabstrahlung der Lichtquellen erhebliche Temperaturunterschiede auftreten können, soll eine möglichst spannungsfreie Fixierung erfolgen.

Ein Lichtmodul mit den Merkmalen des Oberbegriffs des Anspruchs 1 und ein Herstellungsverfahren hierfür sind in der US 2009/0016074 A1 beschrieben.

Der Erfindung liegt die Aufgabe zugrunde, eine Befestigung für Komponenten eines Lichtmoduls zu ermöglichen, welche eine exakte Justierung der Position in drei Raumrichtungen und eine spannungsfreie Fixierung ermöglicht.

Diese Aufgabe wird durch ein Lichtmodul gemäß Anspruch 1 sowie durch ein Verfahren zur Herstellung eines Lichtmoduls nach dem Anspruch 7 gelöst.

Das Lichtmodul umfasst eine Lichtquelleneinheit mit wenigstens einer Lichtquelle zum Ausstrahlen von Licht, eine Primäroptikeinheit mit wenigstens einem optischen Element zum Formen einer Zwischenlichtverteilung aus dem Licht der Lichtquelle. Erfindungsgemäß ist eine Befestigungseinrichtung zum positionsgenauen Befestigen der Primäroptikeinheit an der Lichtquelleneinheit vorgesehen, wobei die Befestigungseinrichtung wenigstens einen Führungsstift und eine zugeordnete Führungsbuchse umfasst. Erfindungsgemäß weist die Führungsbuchse einen von einer Buchseninnenwand definierten Buchseninnenraum mit einer Stiftaufnahmeöffnung auf. Der Führungsstift greift durch die Stiftaufnahmeöffnung derart in den Buchseninnenraum ein, dass zwischen Führungsstift und Buchseninnenwand ein Justierzwischenraum verbleibt. Zur Befestigung von Primäroptikeinheit und Lichtquelleneinheit aneinander ist der Justierzwischenraum zumindest teilweise mit einem Füllklebstoffmaterial derart ausgefüllt, dass eine stoffschlüssige Verbindung zwischen dem Führungsstift und der Führungsbuchse hergestellt ist.

Die Befestigungseinrichtung ermöglicht eine positionsgenaue Befestigung insofern, als dass eine Festlegung der Position von Primäroptikeinheit und Lichtquelleneinheit relativ zueinander bezüglich aller drei Raumrichtungen in gewissem Umfang möglich ist.

Die Befestigung erfolgt über eine Verbindung von Führungsstift und Führungsbuchse mittels des Füllklebstoffmaterials. Die Primäroptikeinheit und die Lichtquelleneinheit werden zu ihrer Verbindung derart zusammengefügt, dass der Führungsstift mit Spiel in die Führungsbuchse eingreift. Zwischen dem Führungsstift und der Buchseninnenwand verbleibt also ein Justierabstand, so dass ein den Führungsstift umgebener Justierzwischenraum zwischen der Buchseninnenwand und dem Führungsstift gebildet wird. Dieser Justierzwischenraum ermöglicht es, dass die Primäroptikeinheit gegenüber der Lichtquelleneinheit zur Justierung verschoben werden kann. Insbesondere ist der Justierabstand so groß, dass auch ein Verkippen der Primäroptikeinheit gegenüber der Lichtquelleneinheit möglich ist. Über die Tiefe, mit der der Führungsstift in die Führungsbuchse eingreift, kann der Abstand zwischen Primäroptikeinheit und Lichtquelleneinheit variiert werden. Eine positionsgenaue Anordnung kann bei der Herstellung des Lichtmoduls beispielsweise dadurch erfolgen, dass die Primäroptikeinheit mittels eines Handhabungsroboters mit Kameraüberwachung platziert und gehalten wird.

Der Justierzwischenraum bildet ein Klebstoffdepot, welches zur Fixierung in der gewünschten Position mit dem Füllklebstoffmaterial zumindest teilweise ausgefüllt wird. Danach wird das Füllklebstoffmaterial ausgehärtet. Die Primäroptikeinheit ist dann positionsgenau mit der Lichtquelleneinheit verbunden. Eine mechanische Verbindung der Einheiten miteinander z.B. durch verkeilen, verklemmen oder verpressen ist nicht erforderlich. Die Befestigungseinrichtung ermöglicht daher eine spannungsfreie Befestigung, was bei auftretenden Temperaturunterschieden im Betrieb des Lichtmoduls vorteilhaft ist.

Im vorliegenden Zusammenhang ist die Primäroptikeinheit als eine optisch funktionale Baueinheit zu verstehen, welche das von der Lichtquelle ausgestrahlte Licht unmittelbar formt oder bündelt oder kollimiert und eine gewünschte Zwischenlichtverteilung erzeugt. Insofern handelt es sich bei der Primäroptikeinheit vorzugsweise nicht um dasjenige optische Element des Lichtmoduls, von dem die endgültige Abstrahllichtverteilung des Lichtmoduls ausgeht. Vielmehr dient die Primäroptikeinheit meist der Vorformung des Lichts. Insbesondere weist das Lichtmodul zusätzlich eine Sekundäroptikeinheit auf, welche dazu eingerichtet ist, die von der Primäroptikeinheit erzeugte Zwischenlichtverteilung in die endgültige Abstrahllichtverteilung zu projizieren.

Die Lichtquelle der Lichtquelleneinheit umfasst vorzugsweise eine Halbleiterlichtquelle mit wenigstens einer Lichtabstrahlfläche. Die Primäroptikeinheit umfasst insbesondere optische Elemente mit Lichteintrittsflächen zum Einkoppeln des ausstrahlbaren Lichts in das optische Element sowie Lichtaustrittsflächen zum Auskoppeln von Licht aus dem optischen Element durch die Lichtaustrittsfläche hindurch. Bei derartigen Lichtmodulen ist es besonders wichtig, dass die Lichteintrittsflächen der Primäroptikeinheit den Lichtabstrahlflächen der Lichtquelleneinheit positionsgenau zugeordnet sind. Dies wird mit der beschriebenen Befestigungseinrichtung ermöglicht.

Die Befestigungseinrichtung umfasst Merkmale sowohl der Primäroptikeinheit, als auch der Lichtquelleneinheit. Vorzugsweise ist der Führungsstift an der Lichtquelleneinheit angeordnet und die zugeordnete Führungsbuchse an der Primäroptikeinheit angeordnet. Denkbar ist jedoch auch eine umgekehrte Aufteilung mit einem an der Primäroptikeinheit vorgesehenen Führungsstift und einer an der Lichtquelleneinheit angeordneten Führungsbuchse.

Vorzugsweise ist die Führungsbuchse zweiseitig offen ausgebildet. Hierzu weist die Führungsbuchse zusätzlich zur Stiftaufnahmeöffnung eine Klebstoffeintragungsöffnung auf. Zwischen der Stiftaufnahmeöffnung und der Klebstoffeintragsöffnung erstreckt sich die Buchseninnenwand. Dies ermöglicht auf besonders einfache Weise die Herstellung der Befestigung. Dazu greift der Führungsstift ausgehend von dem zu befestigenden Bauteil durch die Stiftaufnahmeöffnung in die Führungsbuchse ein. Durch die Klebstoffeintragsöffnung kann dann zur Befestigung das Füllklebstoffmaterial eingebracht werden. Insbesondere ist der Buchseninnenraum in entgegengesetzte Richtungen offen, das heißt die Stiftaufnahmeöffnung und die Klebstoffeintragsöffnung weisen vom Buchseninnenraum ausgesehen in entgegengesetzte Richtungen. Die Führungsbuchse kann als durchgehende Hülse ausgebildet sein, welche in zwei entgegengesetzte Richtungen offen ist.

Vorzugsweise ist der Führungsstift im Wesentlichen als zylindrischer Körper oder zapfenartiger Körper ausgebildet. Der Buchseninnenraum ist vorzugsweise als ein im Wesentlichen zylindrischer Hohlraum ausgestaltet.

Zur weiteren Ausgestaltung weist der Buchseninnenraum einen sich unmittelbar an die Stiftaufnahmeöffnung anschließenden Einführungsabschnitt sowie zusätzlich hierzu einen Füllabschnitt auf. Dabei schließt sich der Füllabschnitt an den Einführungsabschnitt an und ist derart ausgebildet, dass der Einführungsabschnitt eine geringere Querschnittsfläche als der Füllabschnitt aufweist. Im Verlauf von der Stiftaufnahmeöffnung definiert die Buchseninnenwand daher zunächst den Einführungsabschnitt und dann daran anschließend den Füllabschnitt. Aufgrund des geringeren Querschnitts des Einführungsabschnitts bildet der Buchseninnenraum eine topfartige Form, wobei der Boden des "Topfes" ein die Stiftaufnahmeöffnung bildendes Loch aufweist. Der Topfinnenraum gibt dem Führungsstift genügend Spiel zur Justierung der Position. Der Topfinnenraum (also der Füllabschnitt) bildet ein Klebstoffdepot, das zum Befestigen mit dem Füllklebstoffmaterial aufgefüllt wird. Der geringere Querschnitt des Buchseninnenraums im Bereich des Einführungsabschnitts verhindert dabei, dass bei der Verklebung flüssiges Füllklebstoffmaterial am Führungsstift entlang ausläuft.

Vorzugsweise sind der Einführungsabschnitt und der Füllabschnitt jeweils als zylindrische Hohlräume ausgestaltet, wobei der Durchmesser des Einführungsabschnitts geringer ist als der Durchmesser des Füllabschnitts.

Bei der Herstellung des Lichtmoduls kann eine besonders einfache, positionsgenaue Befestigung dadurch ermöglicht werden, dass das Füllklebstoffmaterial in einem Vorfixierbereich des von dem Füllklebstoffmaterial ausgefüllten Buchseninnenraums aus einem ersten Klebematerial und in einem Endfixierbereich des von dem Füllklebstoffmaterial ausgefüllten Buchseninnenraums aus einem zweiten, unterschiedlichen Klebematerial besteht. Zur Befestigung wird die Primäroptikeinheit zunächst an der Lichtquelleneinheit angeordnet, wobei der Führungsstift mit Spiel in die Führungsbuchse eingreift. Nachdem die genaue Position hergestellt worden ist, wird das erste Klebematerial in den Justierzwischenraum eingebracht und ausgehärtet. Der so ausgefüllte Bereich bildet den Vorfixierbereich. Dadurch wird bereits eine stoffschlüssige Verbindung zwischen Führungsstift und Führungsbuchse hergestellt, wodurch eine Vorfixierung erzielt wird. Zur endgültigen, insbesondere hochfesten und dauerhaften Fixierung, wird dann das zweite Klebematerial in den noch nicht ausgefüllten Bereich des Justierzwischenraums eingebracht. Aufgrund der Vorfixierung müssen die Bauteile dabei nicht mehr präzise in Position gehalten werden.

Das erste Klebematerial besteht vorzugsweise aus einem schnell härtenden Klebstoff, insbesondere aus einem mittels UV-Licht aushärtbaren Klebstoff. An die Festigkeit des ersten Klebematerials müssen dabei nur vergleichsweise geringe Anforderungen gestellt werden. Das zweite Klebematerial besteht vorzugsweise aus einem hochfesten Klebstoff, zum Beispiel einem Zweikomponentenklebstoff oder einem Silikonklebstoff. Hierbei kann eine vergleichsweise langsame Aushärtung in Kauf genommen werden.

Das erste Klebematerial im Vorfixierbereich füllt vorzugsweise den oben genannten Einführungsabschnitt des Buchseninnenraums aus. Der oben genannte Füllbereich kann dann (zumindest teilweise) mit dem zweiten Klebematerial ausgefüllt sein und den Endfixierbereich des Füllklebstoffmaterials beinhalten.

Um genügend Spiel zum Verschieben und/oder Verkippen des Führungsstifts bereitzustellen, ist die Führungsbuchse vorzugsweise derart ausgebildet, dass ein zwischen der Buchseninnenwand und dem Führungsstift gemessener Justierabstand zwischen 10% und 100%, vorzugsweise zwischen 50% und 100%, des Stiftdurchmessers des Führungsstifts beträgt. Der Stiftdurchmesser wird dabei senkrecht zu einer Führungsrichtung gemessen, wobei sich der Führungsstift entlang dieser Führungsrichtung erstreckt und entlang der Führungsrichtung in die Führungsbuchse eingreift. Der genannte Justierabstand muss jedoch nicht über den gesamten Verlauf des Führungsstifts entlang der Führungsrichtung in der Führungsbuchse konstant sein. Vielmehr kann bei entsprechender Ausgestaltung der Führungsbuchse der Justierabstand abschnittsweise verschiedene Werte aufweisen. Im Bereich des oben genannten Einführungsabschnitts des Buchseninnenraums beträgt der Justierabstand beispielsweise nur circa 10% - 20% des Stiftdurchmessers. Demgegenüber kann der Justierabstand im Bereich des oben genannten Füllabschnitts beispielsweise genauso groß wie der Stiftdurchmesser gewählt sein. Da der Füllabschnitt vorzugsweise zur Endfixierung komplett mit Füllklebstoffmaterial ausgefüllt wird, kann der Justierabstand hier auch noch größer als der Stiftdurchmesser sein.

Die eingangs gestellte Aufgabe wird auch durch ein Verfahren zur Herstellung eines Lichtmoduls der vorhergehend beschriebenen Art gelöst, welches zumindest eine Lichtquelleneinheit und eine Primäroptikeinheit umfasst. Das Verfahren weist wenigstens die folgenden Schritte auf:
- Anordnen der Primäroptikeinheit und der Lichtquelleneinheit relativ zueinander, wobei ein Führungsstift in eine Führungsbuchse derart eingreift, dass ein Justierzwischenraum zwischen Führungsstift und einer Buchseninnenwand der Führungsbuchse gebildet wird;
- positionsgenaues Ausrichten der Primäroptikeinheit in Bezug auf die Lichtquelleneinheit unter Ausnutzung des zwischen Führungsstift und Buchseninnenwand gebildeten Justierzwischenraums;
- zumindest teilweises Ausfüllen des Justierzwischenraums mit einem Füllklebstoffmaterial;
- Aushärten des Füllklebstoffmaterials, so dass eine stoffschlüssige Verbindung zwischen dem Führungsstift und der Führungsbuchse hergestellt wird.

Bei diesem Herstellungsverfahren erfolgt das positionsgenaue Ausrichten vorzugsweise mit einem Handhabungsroboter, welcher beispielsweise die Primäroptikeinheit greift und dazu ausgebildet ist, die Primäroptikeinheit bezüglich aller drei Raumrichtungen in eine präzise vorgebbare Position auszurichten und dort zu halten. Dabei kann die Position der Primäroptikeinrichtung relativ zur Lichtquelleneinrichtung beispielsweise mit drei oder vier Digitalkameras überwacht werden. Mittels der Kamerasignale kann dann der Handhabungsroboter entsprechend gesteuert werden. Die Digitalkameras fokussieren vorzugsweise einen Zwischenraum, welcher bei der Handhabung zwischen der Primäroptikeinheit und der Lichtquelleneinheit gebildet wird. Zur besseren Positionierung können die Primäroptikeinheit und die Lichtquelleneinheit jeweils Referenzierungsmittel aufweisen, welche eine definierte Position zu funktionalen Bauteilen der Lichtquelleneinheit beziehungsweise der Primäroptikeinheit aufweisen. Ein Referenzierungsmittel kann beispielsweise ein vorspringender Zapfen, eine vorspringende Lasche oder ein positionsgenau angeordnetes Loch sein. Die relative Position der Referenzierungsmittel an Primäroptikeinheit und an Sekundäroptikeinheit zueinander kann dann mit den Digitalkameras überwacht werden.

Zur weiteren Ausgestaltung des Verfahrens kann das Ausfüllen des Justierzwischenraums in zwei Schritten mit verschiedenen Materialien erfolgen. Hierzu wird nach dem positionsgenauen Ausrichten zunächst ein erstes Klebematerial in einen ersten Raumabschnitt des Justierzwischenraums eingefüllt und in einem folgenden Verfahrensschritt, z.B. durch Einstrahlen von UV-Licht, ausgehärtet, so dass eine stoffschlüssige Vorverbindung zwischen dem Führungsstift und der Führungsbuchse hergestellt wird. Daraufhin wird ein zweites Klebematerial in den verbleibenden Raumabschnitt des Justierzwischenraums eingefüllt und daraufhin ausgehärtet, so dass eine stoffschlüssige Endverbindung zwischen dem Führungsstift und der Führungsbuchse hergestellt wird. Nach dem Aushärten des ersten Klebematerials sind die beiden Baueinheiten relativ zueinander vorfixiert und müssen für die nachfolgende Endfixierung nicht mehr in einer relativen Position zueinander festgehalten werden. Das Einfüllen des zweiten Klebematerials zur Endfixierung kann daher mit einer Fertigungseinheit erfolgen, welche keine Mittel zur präzisen Positionierung (wie beispielsweise einen Handhabungsroboter) aufweisen muss.

Weitere Einzelheiten und vorteilhafte Ausgestaltungen der Erfindung sind der nachfolgenden Beschreibung zu entnehmen, anhand derer die in den Figuren dargestellte Ausführungsform der Erfindung näher beschrieben und erläutert ist.

Es zeigen:
- Figur 1: perspektivische Darstellung von Baueinheiten zum Aufbau eines erfindungsgemäßen Lichtmoduls;
- Figur 2: zusammengefügte Baueinheiten eines erfindungsgemäßen Lichtmoduls;
- Figur 3: schematische Darstellung zur Erläuterung der Befestigungseinrichtung;
- Figur 4: Darstellung zur Erläuterung der positionsgenauen Ausrichtung;
- Figur 5: erfindungsgemäßes Lichtmodul mit aneinander befestigten Baueinheiten in perspektivischer Darstellung;
- Figur 6: Lichtmodul aus Figur 5 in Draufsicht; und
- Figur 7: Schnitt entlang A-A in Figur 6.

In der folgenden Beschreibung werden für einander entsprechende Bauteile und Merkmale jeweils dieselben Bezugszeichen verwendet.

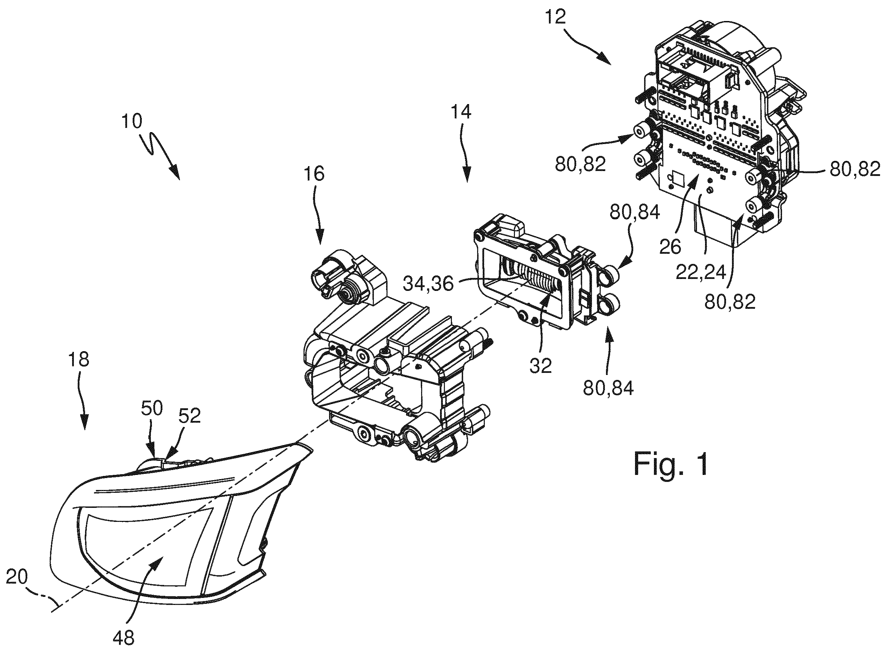

Die Erfindung wird nachfolgend anhand eines modular aufgebauten Lichtmoduls 10 erläutert. Das Lichtmodul 10 umfasst vormontierte Baueinheiten, wie sie in der Figur 1 in perspektivischer Darstellung gezeigt sind.

Die Hauptkomponenten des Lichtmoduls 10 sind: Eine Lichtquelleneinheit 12, eine Primäroptikeinheit 14, ein Halterahmen 16 sowie eine Sekundäroptikeinheit 18. Diese Baueinheiten sind in der Darstellung gemäß Figur 1 entlang einer Montagerichtung 20 aufgereiht abgebildet und werden zur Endmontage des Lichtmoduls 10 im Wesentlichen entlang der Montagerichtung 20 aufeinander zu bewegt und zusammengefügt.

Die Lichtquelleneinheit 12 umfasst eine Leiterplatine 22, welche eine der Primäroptikeinheit 14 zugewandte Frontseite der Lichtquelleneinheit 12 bildet. Auf der Leiterplatine 22 sind eine Mehrzahl von Halbleiterlichtquellen 26 zum Ausstrahlen von Licht gruppiert angeordnet. Ferner sind auf der Leiterplatine 22 elektrische Bauteile einer Steuereinrichtung angeordnet, mittels welcher die einzelnen Halbleiterlichtquellen zur Lichtabgabe ansteuerbar sind.

Die Primäroptikeinheit 14 weist ein Primäroptikelement 32 auf, welches eine Vielzahl von Lichtaustrittsflächen 34 umfasst, die eine zusammenhängende Primäroptikaustrittsfläche 36 bilden. Das Primäroptikelement 32 weist außerdem eine Mehrzahl von Lichteintrittsflächen auf (nicht näher dargestellt), durch welche Licht in das Primäroptikelement 32 eingekoppelt werden kann. Das eingekoppelte Licht wird in dem Primäroptikelement 32 gebündelt oder kollimiert und tritt durch die Lichtaustrittsflächen 34 der Primäroptikaustrittsfläche 36 aus.

Im zusammengebauten Zustand des Lichtmoduls 10 müssen die Lichteintrittsflächen der Primäroptikeinheit 14 den Halbleiterlichtquellen 26 positionsgenau zugeordnet sein. Das durch die Lichteintrittsflächen in das Primäroptikelement 32 eingekoppelte Licht führt auf der Primäroptikaustrittsfläche 36 oder in deren Nähe zu einer Zwischenlichtverteilung, welche über die Sekundäroptikeinheit 18 in die von dem Lichtmodul 10 abgestrahlte Lichtverteilung projiziert wird.

Zur Montage des Lichtmoduls 10 wird zwischen der Primäroptikeinheit 14 einerseits und der Sekundäroptikeinheit 18 andererseits der Halterahmen 16 angeordnet.

Die Sekundäroptikeinheit 18 umfasst eine als Sammellinse ausgebildete Linseneinrichtung 48. Diese ist dazu ausgebildet, im Betrieb des Lichtmoduls 10 die sich auf der Primäroptikaustrittsfläche 36 einstellende Zwischenlichtverteilung in die Abstrahllichtverteilung zu projizieren. Die Sekundäroptikeinheit 18 umfasst außerdem einen Linsenhalter 50, welcher einerseits zum Halten der Linseneinrichtung 48 dient, andererseits zu einer positionsgenauen Ausrichtung der Sekundäroptikeinheit 18 beiträgt. Hierzu weist der der Linseneinrichtung 48 abgewandte Abschnitt des Linsenhalters 50 einen Passabschnitt 52 auf, welcher mit einem entsprechenden Passabschnitt des Halterahmens 16 zusammengefügt werden kann.

Die Endmontage des Lichtmoduls 10 erfolgt unter anderem über eine Befestigungseinrichtung 80 zum positionsgenauen Befestigen der Primäroptikeinheit 14 und der Lichtquelleneinheit 12 aneinander. Die Befestigungseinrichtung 80 umfasst einerseits Führungsstifte 82, welche jeweils paarweise an einander gegenüberliegenden Randbereichen der Lichtquelleneinheit 12 angeordnet sind. Die Führungsstifte 82 erstrecken sich über die Frontseite 24 hinaus in eine Führungsrichtung, welche zur Endmontage in Richtung der zur Befestigenden Primäroptikeinheit 14 weist.

Die Befestigungseinrichtung 80 umfasst außerdem dem Führungsstift 82 jeweils zugeordnete Führungsbuchsen 84, welche an der Primäroptikeinheit 14 vorgesehen sind. Die Führungsbuchsen 84 sind jeweils paarweise an einander gegenüberliegenden Randabschnitten der Primäroptikeinheit 14 angeordnet.

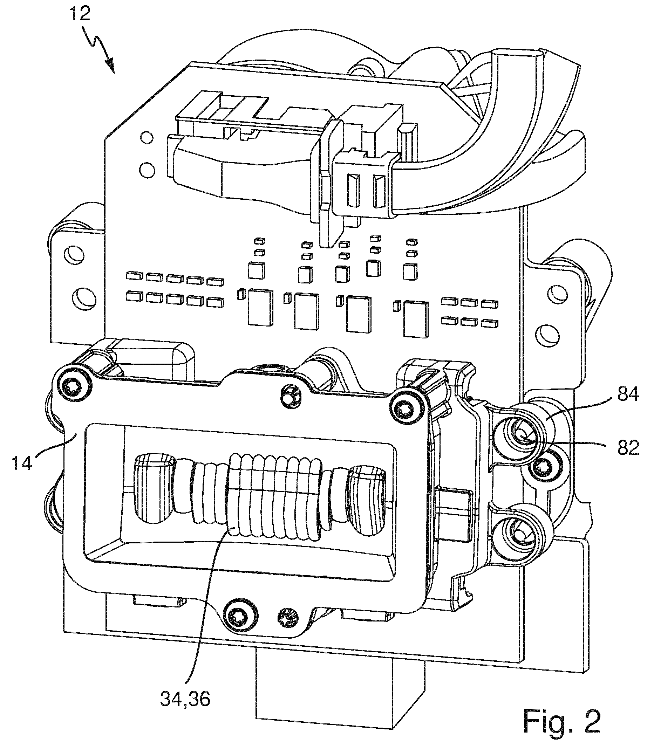

Die Ausgestaltung der Befestigungseinrichtung 80 wird im Folgenden anhand der Figur 2 näher erläutert, welche die Lichtquelleneinheit 12 und die Primäroptikeinheit 14 in einem zusammengesetzten Zustand zeigt. Dabei ist die Primäroptikeinheit 14 noch nicht endgültig an der Lichtquelleneinheit 12 befestigt.

Jede Führungsbuchse 84 ist derart ausgebildet, dass der jeweils zugeordnete Führungsstift 82 in die Führungsbuchse 84 mit Spiel eingreifen kann.

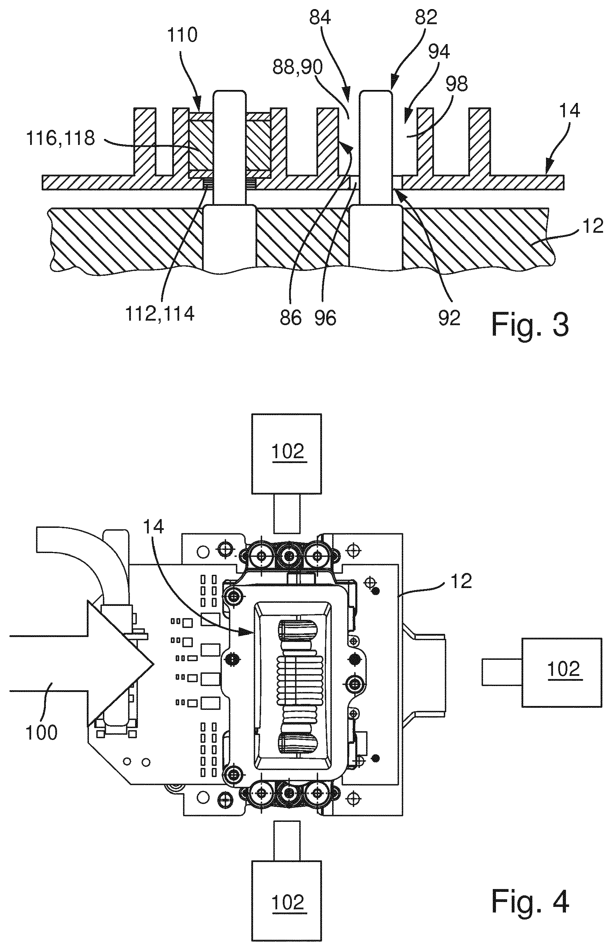

Dies wird näher anhand von Figur 3 erläutert, welche schematisch einen Schnitt durch den in der Figur 2 umrandeten Bereich mit Führungsstift 82 und Führungsbuchse 84 zeigt. Dabei wird im Folgenden zunächst auf die rechte Führungsbuchse 84 eingegangen, in welche noch kein Füllklebstoffmaterial eingefüllt ist.

Diese Führungsbuchse 84 weist einen von einer Buchseninnenwand 86 definierten Buchseninnenraum 88 auf. Dabei ist die Führungsbuchse 84 derart ausgebildet, dass zwischen der Buchseninnenwand 86 und der Oberfläche des Führungsstifts 82 ein Justierabstand 83 verbleibt. Dieser ermöglicht es, dass der Führungsstift 82 in der Führungsbuchse 84 verkippt und senkrecht zur Erstreckungsrichtung des Führungsstifts 82 (also der Führungsrichtung) verschoben werden kann. Daher kann in der Darstellung gemäß Figur 2 die Primäroptikeinheit 14 zur Justierung gegenüber der Lichtquelleneinheit 12 verschoben und verkippt werden, auch wenn die Führungsstifte 82 bereits in die Führungsbuchsen 84 eingreifen.

Wie in der Figur 3 erkennbar, verbleibt zwischen der Buchseninnenwand 86 und dem Führungsstift 82 ein Justierzwischenraum 90.

Um den Führungsstift 82 in den Buchseninnenraum 88 aufzunehmen, weist die Führungsbuchse 84 eine Stiftaufnahmeöffnung 92 auf. Die Stiftaufnahmeöffnung 92 ist zum Zusammenbau des Lichtmoduls 10 der Lichtquelleneinheit 12 zugewandt. Der Buchseninnenraum 88 ist auch in der der Stiftaufnahmeöffnung 92 gegenüberliegenden Richtung offen und weist dort eine Klebstoffeintragsöffnung 94 auf.

Wie in der Figur 3 erkennbar, ist der Führungsstift 82 im Wesentlichen als zylindrischer Körper ausgebildet. Auch der Buchseninnenraum 88 weist abschnittsweise zylindrische Form auf. Im Bereich der Stiftaufnahmeöffnung 92 hat der Buchseninnenraum 88 einen Durchmesser, welcher nur geringfügig größer ist, als der Durchmesser des Führungsstifts 82 (ca. 120 % des Durchmessers). Dies definiert einen Einführungsabschnitt 96 des Buchseninnenraums 88. Im Verlauf ausgehend von der Stiftaufnahmeöffnung 92 in Richtung zur Klebstoffeintragsöffnung 94 erweitert sich der Querschnitt des Buchseninnenraums 88. Dieser weist einen sich an den Einführungsabschnitt 96 anschließenden Füllabschnitt 98 auf. Im Bereich des Füllabschnitts 98 hat der zylindrische Buchseninnenraum einen Durchmesser, welcher ungefähr das Dreifache des Durchmessers des Führungsstifts 82 beträgt. Insgesamt weist der Buchseninnenraum 88 daher eine topfartige Form auf, wobei der Boden des Topfes ein von der Stiftaufnahmeöffnung 82 gebildetes Loch hat. Der Füllabschnitt 98 ermöglicht es, dass der Führungsstift 82 zur Justierung der Position der Primäroptikeinheit 14 in erheblichem Maße verkippt werden kann.

Zur Montage des Lichtmoduls 10 wird zunächst die Primäroptikeinheit 14 derart mit der Lichtquelleneinheit 12 zusammengesetzt, dass die Führungsstifte 82 in der vorstehend beschriebenen Art und Weise in die Führungsbuchsen 84 eingreifen. Eine positionsgenaue Ausrichtung erfolgt vorzugsweise mit einem hochpräzisen Handhabungsroboter, der aus einer Handhabungsrichtung 100 auf die Primäroptikeinheit 14 zugreift, wie es in Figur 4 mit einem Pfeil symbolisiert ist.

Die Position der Primäroptikeinheit 14 relativ zur Lichtquelleneinheit 12 wird dabei mittels CCD-Kameras 102 überwacht. Die Kameras 102 sind derart positioniert, dass die Lichtquelleneinheit 12 und die Primäroptikeinheit 14 aus wenigstens drei verschiedenen Perspektiven aufgenommen werden können, welche derart gewählt sind, dass die relative Lage von Lichtquelleneinheit 12 und Primäroptikeinheit 14 zueinander bestimmbar ist. Mittels dieser Information wird der Handhabungsroboter bei seinem Zugriff über die Handhabungsrichtung 100 präzise gesteuert.

Wenn die gewünschte Position der Primäroptikeinheit 14 relativ zur Lichtquelleneinheit 12 erreicht ist, wird der Justierzwischenraum 90 mit einem Füllklebstoffmaterial 110 zumindest abschnittsweise ausgefüllt und das Füllklebstoffmaterial 110 ausgehärtet, so dass eine stoffschlüssige Verbindung zwischen Führungsstift 82 und Führungsbuchse 84 hergestellt wird. Dadurch wird die Primäroptikeinheit 14 an der Lichtquelleneinheit 12 positionsgenau fixiert.

Die Fixierung wird im Folgenden anhand von Figur 3 näher erläutert, welche in ihrem linken Bereich einen Buchseninnenraum 88 zeigt, welcher abschnittsweise mit Füllklebstoffmaterial 110 ausgefüllt ist.

Das Füllklebstoffmaterial 110 bildet dabei einen den Führungsstift 82 torusartig umgebenden Pfropf, welcher sowohl den Einführungsabschnitt 96 als auch den Füllabschnitt 98 des Buchseninnenraums 88 ausfüllt. Dabei besteht der Pfropf aus Füllklebstoffmaterial 110 jedoch aus zwei verschiedenen Materialien, welche nacheinander jeweils eingefüllt und ausgehärtet werden. Der Einführungsabschnitt 96 ist von einem ersten Klebematerial 112 ausgefüllt, was einen Vorfixierbereich 114 des Pfropfens aus Füllklebstoffmaterial 110 definiert. Das erste Klebematerial 112 besteht vorzugsweise aus einem schnell härtenden Klebstoff, insbesondere aus einem mittels UV-Licht aushärtbaren Klebstoff.

Der Füllabschnitt 98 hingegen ist von einem zweiten Klebematerial 116 ausgefüllt, welches von dem ersten Klebematerial 112 abweicht. Das zweite Klebematerial 116 besteht vorzugsweise aus einem hochfesten Klebstoff, zum Beispiel einem Zweikomponentenklebstoff oder einem Silikonklebstoff. Der mit dem zweiten Klebematerial 116 ausgefüllte Bereich definiert einen Endfixierbereich des Pfropfens aus Füllklebematerial 110.

Zum positionsgenauen Fixieren der Primäroptikeinheit 14 an der Lichtquelleneinheit 12 wird nach dem Ausrichten der beiden Einheiten zueinander zunächst das erste Klebematerial 114 in den Buchseninnenraum 88 eingebracht und so der Justierzwischenraum 90 im Bereich des Einführungsabschnitts 96 ausgefüllt. Danach wird das erste Klebematerial 112 ausgehärtet und so eine stoffschlüssige Vorverbindung zwischen dem Führungsstift 82 und der Führungsbuchse 84 hergestellt. Danach wird der verbleibende Justierzwischenraum 90 (das heißt im Bereich des Füllabschnitts 98) mit dem zweiten Klebematerial 116 ausgefüllt. Danach wird das zweite Klebematerial 116 ausgehärtet. Insgesamt wird daher ein Pfropf aus Füllklebstoffmaterial 110 ausgebildet, welcher einen Vorfixierbereich 114 auf seinem ersten Klebematerial 112 und einen Endfixierbereich 118 aus einem zweiten Klebematerial 116 aufweist.

Selbstverständlich kann der Buchseninnenraum 88 jedoch auch mit einem einheitlichen Füllklebstoffmaterial 110 ausgefüllt werden, welches dann insbesondere sowohl den Einführungsabschnitt 96 als auch den Füllabschnitt 98 in dem den Führungsstift 82 umgebenden Bereich ausfüllt.

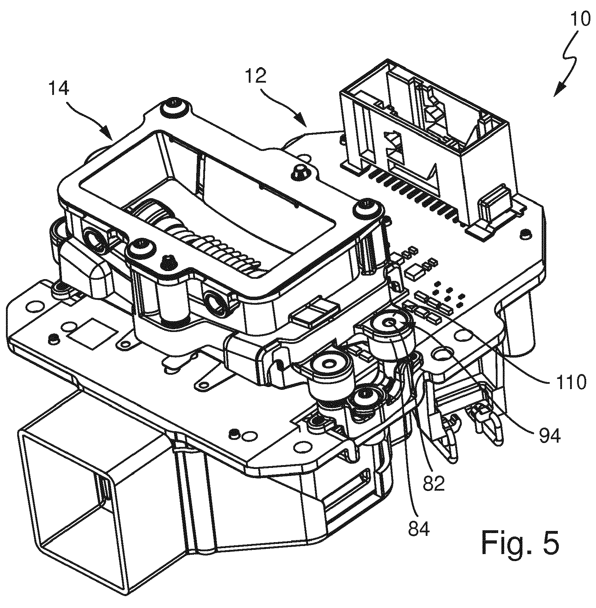

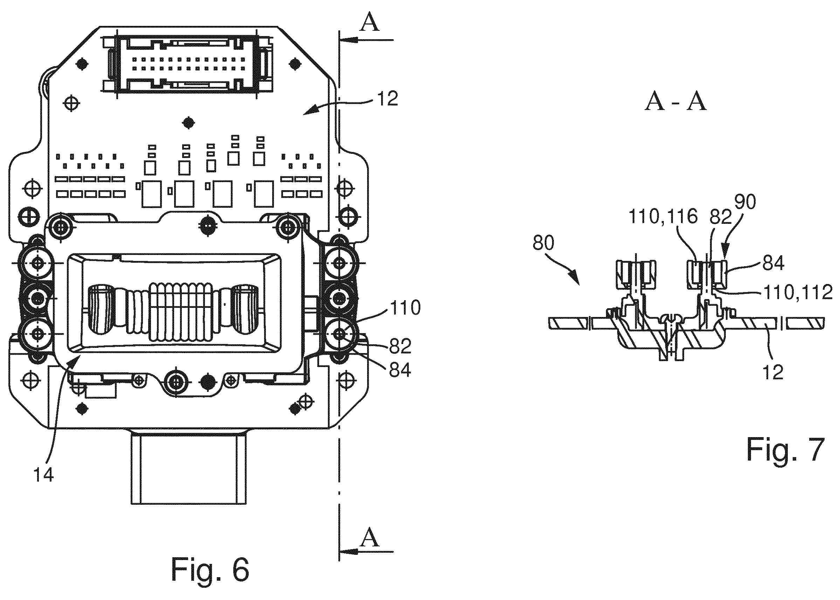

Die Figuren 5 und 6 zeigen das Lichtmodul 10 in einem Herstellungsstadium, in dem die Primäroptikeinheit 14 in der vorstehend erläuterten Art und Weise positionsgenau an der Lichtquelleneinheit 12 befestigt ist. Bei Blick in die Klebstoffeintragsöffnung 54 einer jeweiligen Führungsbuchse 84 ist erkennbar, dass der Führungsstift 82 vollständig von dem Füllklebstoffmaterial 110 umgeben ist. Der Justierzwischenraum 90 ist insofern vollständig mit dem Füllklebstoffmaterial 110 ausgefüllt. Denkbar ist jedoch auch, den Justierzwischenraum 90 nur teilweise auszufüllen. Dies ist ausreichend, sofern eine stoffschlüssige Verbindung zwischen dem Führungsstift 82 und der Führungsbuchse 84 hergestellt wird.

In der Figur 7 ist ein Schnitt durch die Befestigungseinrichtung 80 gezeigt, wenn in der vorstehend beschriebenen Art und Weise eine stoffschlüssige Verbindung zwischen dem Führungsstift 82 und der Führungsbuchse 84 hergestellt worden ist. Der Justierzwischenraum 90 zwischen Führungsstift 82 und Buchseninnenwand 86 (vergleiche Figur 3) ist mit dem Füllklebstoffmaterial 110 (umfassend den Vorfixierbereich 114 mit erstem Klebematerial 112 und den Endfixierbereich 118 mit zweitem Klebematerial 116) ausgefüllt.

Das erläuterte Prinzip zur Befestigung kann auch bei der Anordnung der Sekundäroptikeinheit 18 an dem Halterahmen 16 angewandt werden. Dazu kann der Halterahmen 16 wenigstens einen Führungsstift 82 aufweisen, welcher in eine zugeordnete Führungsbuchse 84 an dem Linsenhalter 50 beziehungsweise an dem Passabschnitt 52 des Linsenhalters 50 angeordnet ist. Nachdem dann, wie oben beschrieben, der Justierzwischenraum 90 mit Füllklebstoffmaterial 110 ausgefüllt und ausgehärtet wurde, besteht eine stoffschlüssige Verbindung zwischen dem Führungsstift 82 und der Führungsbuchse 84, ähnlich wie in der Figur 7 dargestellt. Dies ermöglicht es, die Sekundäroptikeinheit 18 positionsgenau an dem Halterahmen 16 zu befestigen.

Dadurch kann die Sekundäroptikeinheit 18 präzise in Bezug auf die Primäroptikeinheit 14 ausgerichtet werden. Dies ermöglicht es, unerwünschte Dispersionseffekte zu vermeiden, welche bei Ausrichtungsfehlern der Linseneinrichtung 48 in Bezug auf die Primäroptikaustrittsfläche 36 auftreten können (zum Beispiel Farbsaum in der Abstrahllichtverteilung des Lichtmoduls 10).

## Patentansprüche

1. Lichtmodul (10) für KFZ-Scheinwerfer, umfassend
- eine Lichtquelleneinheit (12) mit wenigstens einer eine Lichtabstrahlfläche aufweisenden Lichtquelle (26) zum Ausstrahlen von Licht;
- eine Primäroptikeinheit (14) mit wenigstens einem eine Lichteintrittsfläche zum Einkoppeln des Lichts und eine Lichtaustrittsfläche (34, 36) zum Auskoppeln des Lichts aufweisenden optischen Element (32) zum Formen des von der Lichtquelle ausgestrahlten Lichts zu einer Zwischenlichtverteilung,
- eine Befestigungseinrichtung (80) zum positionsgenauen Befestigen der Primäroptikeinheit (14) und der Lichtquelleneinheit (12) derart aneinander, dass die Lichtabstrahlfläche der Lichtquelle (26) der Lichteintrittsfläche der Primäroptikeinheit (14) positionsgenau zuordenbar ist,
wobei die Befestigungseinrichtung (80) wenigstens einen Führungsstift (82) und eine zugeordnete Führungsbuchse (84) umfasst,
**dadurch gekennzeichnet, dass** die Führungsbuchse (84) einen von einer Buchseninnenwand (86) definierten Buchseninnenraum (88) mit einer Stiftaufnahmeöffnung (92) aufweist,
wobei der Führungsstift (82) durch die Stiftaufnahmeöffnung (92) derart in den Buchseninnenraum (88) eingreift, dass zwischen Führungsstift (82) und Buchseninnenwand (86) ein Justierzwischenraum (90) besteht,
und wobei zur Befestigung der Justierzwischenraum (90) zumindest teilweise mit einem Füllklebstoffmaterial (110) derart ausgefüllt ist, dass eine stoffschlüssige Verbindung zwischen dem Führungsstift (82) und der Führungsbuchse (84) hergestellt ist.

2. Lichtmodul (10) nach Anspruch 1, **dadurch gekennzeichnet, dass** der Führungsstift (82) an der Lichtquelleneinheit (12) angeordnet ist und dass die Führungsbuchse (84) an der Primäroptikeinheit (14) angeordnet ist.

3. Lichtmodul (10) nach Anspruch 1 oder 2, **dadurch gekennzeichnet, dass** die Führungsbuchse (84) zusätzlich zur Stiftaufnahmeöffnung (92) eine Klebstoffeintragsöffnung (94) aufweist.

4. Lichtmodul (10) nach einem der vorhergehenden Ansprüche, **dadurch gekennzeichnet, dass** der Buchseninnenraum (88) einen sich unmittelbar an die Stiftaufnahmeöffnung (92) anschließenden Einführungsabschnitt (96) sowie einen Füllabschnitt (98) aufweist, der sich an den Einführungsabschnitt (96) anschließt, wobei der Einführungsabschnitt (96) eine geringere Querschnittsfläche als der Füllabschnitt (98) aufweist.

5. Lichtmodul (10) nach einem der vorherigen Ansprüche, **dadurch gekennzeichnet, dass** das Füllklebstoffmaterial (110) in einem Vorfixierbereich (114) aus einem ersten Klebematerial (112) und in einem Endfixierbereich (118) aus einem zweiten, unterschiedlichen Klebematerial (116) besteht.

6. Lichtmodul (10) nach einem der vorherigen Ansprüche, **dadurch gekennzeichnet, dass** sich der Führungsstift (82) in eine Führungsrichtung erstreckt und einen senkrecht zur Führungsrichtung gemessenen Stiftdurchmesser aufweist, und dass die Führungsbuchse (84) derart ausgebildet ist, dass ein zwischen Buchseninnenwand (86) und Führungsstift (82) gemessener Justierabstand (83) zwischen 10 % und 100 %, vorzugsweise zwischen 50 % und 100 % des Stiftdurchmessers beträgt.

7. Verfahren zur Herstellung eines Lichtmoduls (10) nach Anspruch 1 mit einer Lichtquelleneinheit (12) und einer Primäroptikeinheit (14) mit wenigstens einem eine Lichteintrittsfläche zum Einkoppeln des Lichts und eine Lichtaustrittsfläche (34, 36) zum Auskoppeln des Lichts aufweisenden optischen Element (32),
umfassend die Schritte:
- Anordnen von Primäroptikeinheit (14) und Lichtquelleneinheit (12) relativ zueinander, wobei ein Führungsstift (82) einer zum positionsgenauen Befestigen der Primäroptikeinheit (14) an der Lichtquelleneinheit (12) vorgesehenen Befestigungseinrichtung (80) des Lichtmoduls (10) in eine Führungsbuchse (84) der Befestigungseinrichtung (80) derart eingreift, dass ein Justierzwischenraum (90) zwischen Führungsstift (82) und einer Buchseninnenwand (86) der Führungsbuchse (84) gebildet wird;
- positionsgenaues Ausrichten der Primäroptikeinheit (14) in Bezug auf die Lichtquelleneinheit (12);
- zumindest teilweises Ausfüllen des Justierzwischenraum (90) mit einem Füllklebstoffmaterial (110);
- Aushärten des Füllklebstoffmaterials (110), so dass eine stoffschlüssige Verbindung zwischen dem Führungsstift (82) und der Führungsbuchse (84) hergestellt wird.

8. Verfahren nach dem vorherigen Anspruch, **dadurch gekennzeichnet, dass** nach dem positionsgenauen Ausrichten folgende Schritte durchgeführt werden:
- Einfüllen eines ersten Klebematerial (112) in einen ersten Raumabschnitt (114) des Justierzwischenraumes (90);
- Aushärten des ersten Klebematerials (112), so dass eine stoffschlüssige Vorverbindung zwischen dem Führungsstift (82) und der Führungsbuchse (84) hergestellt wird;
- Einfüllen eines zweiten Klebematerials (116) in den verbleibenden Raumabschnitt (118) des Justierzwischenraums (90);
- Aushärten des zweiten Klebematerials (116), so dass eine stoffschlüssige Endverbindung zwischen dem Führungsstift (82) und der Führungsbuchse (84) hergestellt wird.

## Claims

1. A light module (10) for motor vehicle headlights, including
- a light source unit (12) having at least one light source (26) for emitting light, which light source has a light-projection face;
- a primary optical unit (14) having at least one optical element (32), the optical element having a light input face for inputting the light and a light output face (34, 36) for outputting the light, for forming the light, emitted by the light source, for an intermediate light distribution,
- a securing device (80) for precise-positional securing of the primary optical unit (14) and the light source unit (12) to one another in such a way that the light-projection face of the light source (26) can be associated precisely in terms of position with the light input face of the primary optical unit (14),
wherein the securing device (80) includes at least one guide pin (82) and an associated guide bush (84),
**characterized in that** the guide bush (84) has a bush interior (88), defined by an inner bush wall (86), the bush interior having a pin receptacle opening (92),
and the guide pin (82), through the pin receptacle opening (92), engages the bush interior (88) in such a way that between the guide pin (82) and the inner bush wall (86), there is an intermediate adjusting chamber (90),
and for securing purposes, the intermediate adjusting chamber (90) is filled at least partially with an adhesive filler material in such a way that a material connection is established between the guide pin (82) and the guide bush (84).

2. The light module (10) of claim 1, **characterized in that** the guide pin (82) is located on the light source unit (12); and that the guide bush (84) is located on the primary optical unit (14).

3. The light module (10) of claim 1 or 2, **characterized in that** the guide bush (84), in addition to the pin receptacle opening (92), has an adhesive application opening (94).

4. The light module (10) of one of the foregoing claims, **characterized in that** the bush interior (88) has both an insertion portion (96), directly adjoining the pin receptacle opening (92), and a fill portion (98), which adjoins the insertion portion (96), and the insertion portion (96) has a smaller cross-sectional area than the fill portion (98).

5. The light module (10) of one of the foregoing claims, **characterized in that** the adhesive filler material comprises a first adhesive material (112) in a pre-fixation region (114) and a second, different adhesive material (116) in a final fixation region (118).

6. The light module (10) of one of the foregoing claims, **characterized in that** the guide pin (82) extends in a guide direction and has a pin diameter, measured perpendicular to the guide direction, and that the guide bush (84) is embodied such that a calibration spacing (83), measured between the inner bush wall (86) and the guide pin (82), amounts to between 10% and 100%, preferably between 50% and 100%, of the pin diameter.

7. A method for producing a light module (10) of claim 1, having a light source unit (12) and a primary optical unit (14) with at least one optical element (32), the optical element having a light input face for inputting the light and a light output face (34, 36) for outputting the light,
including the following steps:
- locating the primary optical unit (14) and the light source unit (12) relative to one another, wherein a guide pin (82) of a securing device (80) of the light module (10), the securing device being provided for positionally precisely securing the primary optical unit (14) to the light source unit (12), engages a guide bush (84) of the securing device (80) in such a way that an intermediate adjusting chamber (90) is formed between the guide pin (82) and an inner bush wall (86) of the guide bush (84);
- positionally precise alignment of the primary optical unit (14) relative to the light source unit (12);
- at least partial filling of the intermediate adjusting chamber (90) with an adhesive filler material;
- hardening of the adhesive filler material, so that a material connection is established between the guide pin (82) and the guide bush (84).

8. The method of the foregoing claim, **characterized in that** after the positionally precise alignment, the following steps are performed:
- introducing a first adhesive material (112) into a first chamber portion (114) of the intermediate adjusting chamber (90);
- hardening of the first adhesive material (112), so that a material preconnection is established between the guide pin (82) and the guide bush (84);
- introducing a second adhesive material (116) into the remaining chamber portion (118) of the intermediate adjusting chamber (90);
- hardening of the second adhesive material (116), so a material final connection is established between the guide pin (82) and the guide bush (84).

## Revendications

1. Module de lumière (10) pour un phare de véhicule automobile, comprenant
- une unité de source lumineuse (12) ayant au moins une source lumineuse (26) qui présente une surface d'émission de lumière et est destinée à émettre de la lumière,
- une unité d'optique primaire (14) ayant au moins un élément optique (32) qui présente une surface d'entrée de lumière pour l'injection de la lumière et une surface de sortie de lumière (34, 36) pour l'extraction de la lumière et qui est destiné à former la lumière émise par ladite source lumineuse, pour obtenir une répartition lumineuse intermédiaire,
- un dispositif de fixation (80) destiné à fixer en position précise ladite unité d'optique primaire (14) et ladite unité de source lumineuse (12) l'une sur l'autre de telle manière que la surface d'émission de lumière de la source lumineuse (26) peut être associée à position précise à la surface d'entrée de lumière de ladite unité d'optique primaire (14),
dans lequel ledit dispositif de fixation (80) comprend au moins une broche de guidage (82) et une douille de guidage (84) associée,
**caractérisé par le fait que** ladite douille de guidage (84) présente un espace intérieur de douille (88) défini par une paroi intérieure de douille (86) et ayant une ouverture de réception de broche (92),
dans lequel ladite broche de guidage (82) s'engage à travers ladite ouverture de réception de broche (92) de telle manière dans ledit espace intérieur de douille (88) qu'il existe un intervalle d'ajustage (90) entre la broche de guidage (82) et la paroi intérieure de douille (86),
et dans lequel, pour la fixation, ledit intervalle d'ajustage (90) est rempli au moins en partie d'une matière de colle de remplissage (110) de telle manière qu'un assemblage par liaison de matière est réalisé entre la broche de guidage (82) et la douille de guidage (84).

2. Module de lumière (10) selon la revendication 1, **caractérisé par le fait que** la broche de guidage (82) est disposée sur ladite unité de source lumineuse (12) et que la douille de guidage (84) est disposée sur ladite unité d'optique primaire (14).

3. Module de lumière (10) selon la revendication 1 ou 2, **caractérisé par le fait que** la douille de guidage (84) présente une ouverture d'introduction de colle (94) en plus de ladite ouverture de réception de broche (92).

4. Module de lumière (10) selon l'une quelconque des revendications précédentes, **caractérisé par le fait que** ledit espace intérieur de douille (88) présente une portion d'introduction (96) située directement à la suite de ladite ouverture de réception de broche (92) ainsi qu'une portion de remplissage (98) qui est située à la suite de la portion d'introduction (96), dans lequel ladite portion d'introduction (96) présente une aire de la section plus faible que ladite portion de remplissage (98).

5. Module de lumière (10) selon l'une quelconque des revendications précédentes, **caractérisé par le fait que** la matière de colle de remplissage (110) se compose, dans une zone de préfixation (114), d'une première matière adhésive (112) et, dans une zone de fixation finale (118), d'une deuxième matière adhésive (116) différente.

6. Module de lumière (10) selon l'une quelconque des revendications précédentes, **caractérisé par le fait que** ladite broche de guidage (82) s'étend dans une direction de guidage et présente un diamètre de broche mesuré perpendiculairement à la direction de guidage, et que ladite douille de guidage (84) est réalisée de telle manière qu'une distance d'ajustage (83) mesurée entre la paroi intérieure de douille (86) et la broche de guidage (82) est comprise entre 10 % et 100 %, de préférence entre 50 % et 100 % du diamètre de la broche.

7. Procédé de fabrication d'un module de lumière (10) selon la revendication 1, comprenant une unité de source lumineuse (12) et une unité d'optique primaire (14) ayant au moins un élément optique (32) qui présente une surface d'entrée de lumière pour l'injection de la lumière et une surface de sortie de lumière (34, 36) pour l'extraction de la lumière,
comprenant les étapes consistant:
- à disposer ladite unité d'optique primaire (14) et ladite unité de source lumineuse (12) l'une par rapport à l'autre, une broche de guidage (82) d'un dispositif de fixation (80) du module de lumière (10), qui est prévu pour fixer en position précise ladite unité d'optique primaire (14) sur ladite unité de source lumineuse (12), s'engageant dans une douille de guidage (84) du dispositif de fixation (80) de telle manière qu'un intervalle d'ajustage (90) est formé entre la broche de guidage (82) et une paroi intérieure de douille (86) de la douille de guidage (84);
- à aligner à position précise ladite unité d'optique primaire (14) par rapport à ladite unité de source lumineuse (12);
- à remplir au moins en partie, d'une matière de colle de remplissage (110), ledit intervalle d'ajustage (90);
- à durcir la matière de colle de remplissage (110) de sorte qu'un assemblage par liaison de matière est réalisé entre la broche de guidage (82) et la douille de guidage (84).

8. Procédé selon la revendication précédente, **caractérisé par le fait que**, après avoir aligné à position précise, on met en oeuvre les étapes suivantes consistant:
- à remplir une première matière adhésive (112) dans une première portion d'espace (114) de l'intervalle d'ajustage (90);
- à durcir la première matière de colle (112) de sorte qu'un pré-assemblage par liaison de matière est réalisé entre la broche de guidage (82) et la douille de guidage (84);
- à remplir une deuxième matière adhésive (116) dans la portion d'espace restante (118) de l'intervalle d'ajustage (90);
- à durcir la deuxième matière adhésive (116) de sorte qu'un assemblage final par liaison de matière est réalisé entre la broche de guidage (82) et la douille de guidage (84).
